# EUROPÄISCHE PATENTSCHRIFT

(11) **EP 2 519 958 B1**
(45) Veröffentlichungstag und Bekanntmachung des Hinweises auf die Patenterteilung: **31.07.2013**
(21) Anmeldenummer: 10784727.9
(22) Anmeldetag: 05.11.2010
(51) Int. Cl.: H01G 4/228

(54) **LEISTUNGSKONDENSATOR**
POWER CAPACITOR
CONDENSATEUR DE PUISSANCE

(30) Priorität: 29.12.2009 DE 102009055376
(43) Veröffentlichungstag der Anmeldung: 07.11.2012
(73) Patentinhaber: Robert Bosch GmbH, 70442 Stuttgart (DE)
(72) Erfinder: SPARKA, Hartmut, 71701 Schwieberdingen (DE)
(86) Internationale Anmeldenummer: PCT/EP2010/066874
(87) Internationale Veröffentlichungsnummer: WO 2011/079993

(56) Entgegenhaltungen:
- EP-A1- 0 517 936
- WO-A2-2006/116967

## Beschreibung

Die Erfindung betrifft einen Leistungskondensator mit integrierter Entstörkapazität.

### Stand der Technik

Pulswechselrichter mit Leistungskondensatoren in Form von Zwischenkreiskondensatoren finden vielfältige Anwendung, so z.B. in der Kraftfahrzeugtechnik. Für den Antrieb in Hybrid- oder Elektrofahrzeugen werden in der Regel elektrische Maschinen in Form von Drehfeldmaschinen eingesetzt, welche in Verbindung mit Pulswechselrichtern - häufig auch als Inverter bezeichnet - betrieben werden. Die elektrischen Maschinen werden dabei wahlweise im Motor- oder Generatorbetrieb betrieben. Im Motorbetrieb erzeugt die elektrische Maschine ein Antriebsmoment, welches beim Einsatz in einem Hybridfahrzeug einen Verbrennungsmotor, zum Beispiel in einer Beschleunigungsphase, unterstützt. Im Generatorbetrieb erzeugt die elektrische Maschine elektrische Energie, die in einem Energiespeicher, wie zum Beispiel einer Batterie, gespeichert wird. Zur Stabilisierung der Batteriespannung ist ein Zwischenkreiskondensator vorgesehen. Betriebsart und Leistung der elektrischen Maschine werden über den Pulswechselrichter eingestellt.

Um elektromagnetische Störungen, welche durch parasitäre Kapazitäten der einzelnen Wicklungsstränge der Drehfeldmaschine verursacht werden, zumindest weitgehend zu eliminieren, müssen EMV-Maßnahmen (EMV = Elektromagnetische Verträglichkeit) getroffen werden. Üblicher Weise werden dafür Entstörkapazitäten in Form separater Entstörkondensatoren in den Pulswechselrichter integriert, indem sie jeweils zwischen einen von der Batterie kommenden Anschluss und der Gehäusemasse eines Gehäuses des Pulswechseinchters geschaltet werden.

Die Druckschrift WO 2006/116967 A2 offenbart einen Kondensator, der ein Gehäuse und mindestens einen Kondensatorwickel aufweist, wobei die Stromversorgung des Kondensatorwickels mittels Stromschienen erfolgt. Der Kondensator weist dabei eine geringe Eigeninduktivität auf.

### Offenbarung der Erfindung

Die vorliegende Erfindung schafft einen Leistungskondensator, insbesondere einen Zwischenkreiskondensator, mit einem Kondensatorgehäuse, welches eine erste Gehäusewand, insbesondere aus Metall, aufweist, die mit einem Gehäuse einer Elektronikeinheit, insbesondere Leistungselektronikeinheit, galvanisch verbindbar ist, und mit flächig ausgeführten Bestromungseinheiten zum Bestromen des Leistungskondensators, wobei ein erster Teilbereich einer ersten Bestromungseinheit in einem Innenraum des Gehäuses benachbart und beabstandet zur ersten Gehäusewand oder zu einer mit der ersten Gehäusewand leitfähig verbundenen anderen Gehäusewand des Kondensatorgehäuses verläuft. Erfindungsgemäß ist zwischen dem ersten Teilbereich der ersten Bestromungseinheit und dieser Gehäusewand eine Schicht aus einem von Luft verschiedenem dielektrischen Material angeordnet.

Durch das Einbringen eines Dielektrikums, welches zum Beispiel als dielektrisehe Folie oder dielektrisches Gel oder dielektrisches Harz ausgebildet sein kann, werden zwischen dem der Gehäusewand zugewandten Teilbereich der Bestromungseinheit und der Gehäusewand andererseits Entstörkapazitäten, sogenannte Y-Kondensatoren, in Form von Flächenkondensatoren ausgebildet, über welche schädliche Störströme abfließen können. Ist der Leistungskondensator auf der dem Gehäuse der Elektronikeinheit zugewandten Seite offen, also nicht von einem Kondensatorgehäuse umgeben, so wird der Flächenkondensator unmittelbar zwischen der Bestromungseinheit des Leistungskondensators und der Gehäusewand der Elektronikeinheit ausgebildet und dadurch unmittelbar eine Verbindung zur Gehäusemasse der Elektronikeinheit hergestellt. Ist der Leistungskondensator auf der dem Gehäuse der Elektronikeinheit zugewandten Seite durch eine Kondensatorgehäuse geschützt, wird die elektrische Verbindung zur Gehäusemasse der Elektronikeinheit dadurch hergestellt, dass die Gehäusewand des Leistungskondensators mit dem Gehäuse der Elektronikeinheit galvanisch, also elektrisch leitend verbunden wird. Dies erfolgt in der Regel dadurch, dass der Leistungskondensator unmittelbar an die Elektronikeinheit, welche zum Beispiel ein Pulswechselrichter sein kann, montiert wird. Die Gehäuse des Leistungskondensators sowie der Elektronikeinheit sind dabei vorteilhaft aus Metall gefertigt.

Die der Erfindung zugrunde liegende Idee besteht damit darin, Entstörkapazitäten durch geeignetes Einbringen von dielektrischem Material in den Leistungskondensator unmittelbar in den Leistungskondensator zu integrieren. Dadurch können zusätzliche Kosten für separate Entstörkapazitäten sowie deren Anbau an die Stromverschienung eingespart werden. Außerdem wird kein zusätzlicher Bauraum benötigt. Darüber hinaus können die Störströme über die innerhalb des Leistungskondensators gebildeten Flächenkondensatoren deutlich niederimpedanter abfließen als über die induktiv wirkenden Anschlussleitungen separater Entstörkapazitäten. Da die wie Induktivitäten wirkenden dünnen Anschlussdrähte herkömmlicher Entstörkapazitäten auch die kapazitive Wirkung beeinträchtigen, können die Flächenkondensatoren innerhalb des Leistungskondensators demgegenüber mit geringerer Kapazität ausgelegt werden.

Gemäß einer Ausführungsform der Erfindung verlaufen die Bestromungseinheiten zumindest in einem zweiten Teilbereich, welcher auch dem ersten Teilbereich der ersten Bestromungseinheit entsprechen kann, im Wesentlichen überlappend und beabstandet zueinander. In dem zweiten Teilbereich zwischen den Bestromungeinheiten ist eine Schicht aus einem von Luft verschiedenem dielektrischem Material angeordnet. Vorteilhaft wird dabei als dielektrisches Material ein für die Hochfrequenztechnik geeignetes dielektrisches Material verwendet.

Der mit Hilfe des dielektrischen Materials zwischen den beiden Bestromungseinheiten ausgebildete Flächenkondensator bildet einen X-Kondensator, welcher parallel zu dem eigentlichen, durch einen oder mehrere Kondensatorwickel sowie ggf. weitere Komponenten gebildeten Leistungskondensator liegt. Leistungskondensatoren können funktionsbedingt eine große Energiemenge aufnehmen, sind aber "langsam". Durch Verwendung eines für die Hochfrequenztechnik geeigneten Dielektrikums kann der zusätzliche X-Kondensator deutlich "schneller" ausgelegt werden, so dass höhere Frequenzen besser kurzgeschlossen werden können und damit die Entstörwirkung verbessert werden kann.

Gemäß einer weiteren Ausführungsform der Erfindung wird der erste Teilbereich der ersten Bestromungseinheit durch eine erste Stromschiene gebildet, welche elektrisch leitend mit einer ersten, flächig ausgebildeten Kontaktschiene verbunden ist, welche sich entlang einer zweiten Gehäusewand des Kondensatorgehäuses benachbart und beabstandet zu dieser erstreckt. Eine zweite Bestromungseinheit umfasst eine zweite Stromschiene, welche im Wesentlichen überlappend und beabstandet zu der ersten Stromschiene verläuft und elektrisch leitend mit einer flächig ausgestalteten zweiten Kontaktschiene verbunden ist, welche sich entlang einer der zweiten Gehäusewand gegenüberliegenden Seite des Kondensatorgehäuses erstreckt. Die Kontaktschienen dienen dabei zur Bestromung mindestens eines Kondensatorwickels des Leistungskondensators.

Um die kapazitive Wirkung des Leistungskondensators zu erhöhen ist es wichtig, die induktiven Störanteile möglichst gering zu halten. Dazu dient einerseits die flächige Ausgestaltung der Stromschienen. Die genannte Ausführungsform trägt dazu bei, dass die Induktivität des Leistungskondensators weiter gesenkt wird.

Gemäß einer weiteren Ausführungsform ist zwischen der ersten Kontaktschiene und der zweiten Gehäusewand eine Schicht aus einem von Luft verschiedenem dielektrischem Material angeordnet. Auf diese Weise kann der als Y-Kondensator wirkende Flächenkondensator "vergrößert" werden und damit seine kapazitive Wirkung verstärkt werden.

Eine weitere Ausführungsform der Erfindung sieht vor, dass eine der Kontaktschienen elektrisch mit einer flächig ausgestalteten Zusatzstromschiene verbunden ist, welche sich entlang einer der ersten Gehäusewand gegenüberliegenden dritten Gehäusewand des Kondensatorgehäüses erstreckt. Dabei ist zwischen der Zusatzstromschiene und der dritten Gehäusewand eine Schicht aus einem von Luft verschiedenem dielektrischem Material angeordnet. Auch auf diese Weise kann der als Y-Kondensator wirkende Flächenkondensator "vergrößert" werden und damit seine kapazitive Wirkung verstärkt werden.

Weitere Merkmale und Vorteile von Ausführungsformen der Erfindung ergeben sich aus der nachfolgenden Beschreibung mit Bezug auf die beigefügten Figuren.

### Kurze Beschreibung der Figuren

Es zeigen:
- Figur 1: einen Leistungskondensator in perspektivischer Ansicht,
- Figur 2: eine Ausführungsform eines erfindungsgemäßen Leistungskondensators in einem schematischen Querschnitt und
- Figur 3: einen schematisierten Schaltplan einer elektrischen Maschine mit einem Pulswechselrichter und einem erfindungsgemäßen Zwischenkreiskondensator.

### Beschreibung der Ausführungsbeispiele

In den Figuren sind identische oder funktionsgleiche Komponenten jeweils mit dem gleichen Bezugszeichen gekennzeichnet.

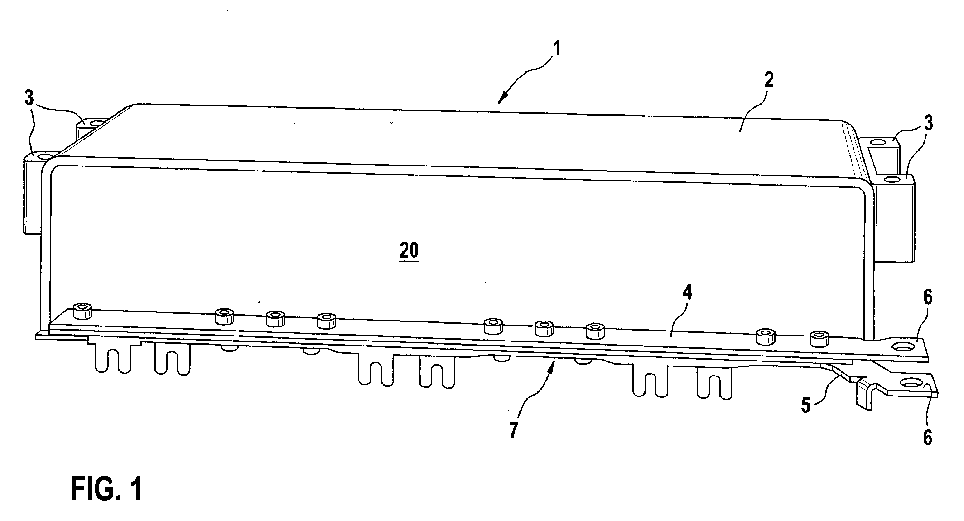

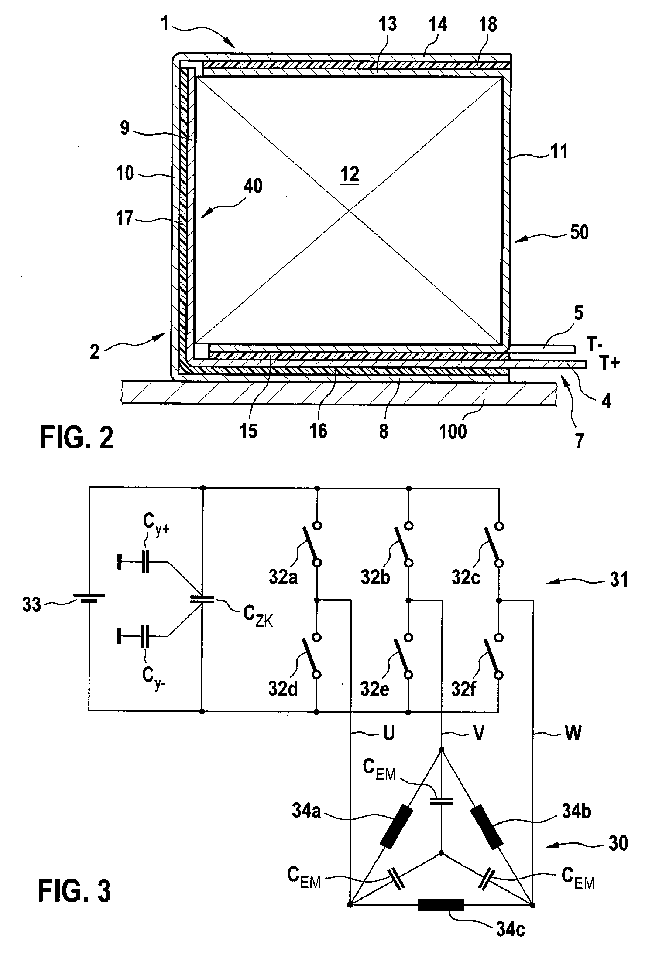

Figur 1 zeigt einen Leistungskondensator 1, der beispielsweise als Zwischenkreiskondensator eingesetzt werden kann, mit einem Kondensatorgehäuse 2. Im oberen Bereich der seitlichen Gehäusewände sind mehrere Montageösen 3 angeordnet, mit deren Hilfe der Leistungskondensator an eine Seitenwand 100 (vgl. Figur 2) einer Elektronikeinheit, wie zum Beispiel eines Pulswechselrichters (vgl. Figur 3) montiert werden kann. Die Montage erfolgt dabei derart, dass eine erste Gehäusewand, welche bei dem in Figur 1 dargestellten Leistungskondensator 1 der Bodenplatte entspricht, welche aufgrund der gewählten Darstellungsperspektive in Figur 1 nicht sichtbar ist, mit einem Gehäuse 100 der Elektronikeinheit galvanisch, das heißt elektrisch leitend verbunden wird. Dazu sind das Kondensatorgehäuse 2 sowie das Gehäuse 100 der Elektronikeinheit vorteilhaft zumindest in Teilbereichen als Metallgehäuse ausgeführt.

Zwei Stromschienen 4 und 5, welche der Bestromung des Leistungskondensators 1 dienen, sind an den Leistungskondensator 1 herangeführt. Über jeweils eine Montageöse 6 sind die beiden Stromschienen 4 und 5 mit einem positiven bzw. einem negativen Anschluss eines in Figur 1 nicht dargestellten Energiespeichers, wie z.B. einer Hochvoltbatterie eines Kraftfahrzeugbordnetzes, elektrisch verbindbar. Die Stromschienen 4 und 5 sind flächig ausgeführt, von einander beabstandet und überlappen einander weitgehend, um eine möglichst niederinduktive Verteilung des Stromes zu ermöglichen.

Wie in Figur 2 erkennbar ist, setzen sich die Stromschienen 4 und 5 auch in den Innenraum des Kondensatorgehäuses 2 hinein flächig fort und verlaufen dort parallel und beabstandet zu einer ersten Gehäusewand 8 des Kondensatorgehäuses 2. Bei der in den Figuren 1 und 2 dargestellten Ausführungsform des Leistungskondensators 1 ist das Kondensatorgehäuse 1 topfförmig ausgebildet. Die in Figur 2 auf der rechten Seite des Leistungskondensators 1 dargestellte offene Seite des Kondensatorgehäuses 2 wird bei der Herstellung des Leistungskondensators abschließend mit Hilfe einer Vergussmasse verschlossen. Diese durch eine Vergussmasse gebildete Gehäusewand 20 ist in Figur 1 im Vordergrund dargestellt.

Von einer ersten Stromschiene 4, welche im dargestellten Ausführungsbeispiel mit dem positiven Anschluss T+ eines Energiespeichers (vgl. Figur 3) zu verbinden ist, ist nach oben eine erste flächig ausgebildete Kontaktschiene 9 abgebogen, welche dann entlang einer zweiten Gehäusewand 10 des Kondensatorgehäuses 2 beabstandet zu dieser verläuft. Von der zweiten Stromschiene 5, welche im dargestellten Ausführungsbeispiel mit dem negativen Anschluss T- des Energiespeichers zu verbinden ist, ist nach oben eine flächig ausgebildete zweite Kontaktschiene 11 abgebogen, welche dann entlang einer der zweiten Gehäusewand 10 gegenüberliegenden Seite des Kondensatorgehäuses 2 verläuft. Im dargestellten Ausführungsbeispiel verläuft die zweite Kontaktschiene 11 auf der zunächst offenen und abschließend vergossenen Seite des Kondensatorgehäuses 2. Die beiden Kontaktschienen 9 und 11 dienen einer möglichst niederinduktiven Kontaktierung ein oder mehrerer lediglich schematisch in Form eines Blocks dargestellter Kondensatorwickel 12.

Von der zweiten Kontaktschiene 11 ist nach links eine flächig ausgeführte Zusatzstromschiene 13 abgebogen, welche dann entlang einer der ersten Gehäusewand 8 gegenüberliegenden dritten Gehäusewand 14 des Kondensatorgehäuses 2 beabstandet zu dieser verläuft.

Die Kontaktschienen 9 und 11 sowie die Zusatzstromschiene 13 müssen nicht notwendigerweise durch Biegen hergestellt sein, sondern können auch als separates Teil elektrisch leitend an der jeweiligen Stromschiene 4 oder 5 oder der Kontaktschiene 11 befestigt sein.

Die Stromschiene 4 bildet zusammen mit der Kontaktschiene 9 eine erste Bestromungseinheit 40 zum Bestromen des Leistungskondensators 1. Eine zweite Bestromungseinheit 50 wird durch die Stromschiene 5, die Kontaktschiene 11 und die Zusatzstromschiene 13 gebildet. Dabei bilden die einzelnen Schienen 4, 5, 9, 11 und 13 jeweils Teilbereiche der entsprechenden Bestromungseinheiten 40 und 50.

Zwischen der ersten Stromschiene 4 und der zweiten Stromschiene 5 sowie zwischen der ersten Stromschiene 4 und der ersten Gehäusewand 8 ist jeweils eine Schicht 15 bzw. 16 aus einem von Luft verschiedenem dielektrischem Material, z.B. Silikon, angeordnet. Das dielektrische Material ist dabei zum Beispiel in Form einer dielektrischen Folie, eines dielektrischen Gels oder auch in Form eines dielektrischen Harzes einbringbar. Dabei können gleiche oder auch verschiedene Dielektrika verwendet werden.

Durch das Einbringen der Dielektrika werden zwischen den Stromschienen 4 und 5 einerseits und der ersten Gehäusewand 8 andererseits in Reihe geschaltete Y-Kondensatoren Cy(T+) bzw. Cy(T-), in Form von Flächenkondensatoren ausgebildet, über welche schädliche Störströme abfließen können. Dabei wirkt für den Y-Kondensator Cy(T+) lediglich die Schicht 16 als Dielektrikum, wohingegen der Y-Kondensator Cy(T-) beide Schichten 15 und 16 als Dielektrikum nutzt. Die elektrische Verbindung zur Gehäusemasse der Elektronikeinheit wird anschließend durch galvanisches Verbinden der ersten Gehäusewand 8 mit dem Gehäuse 100 der Elektronikeinheit hergestellt. Alternativ zu der in den Figuren 1 und 2 dargestellten Ausführungsform kann der der Gehäusewand 100 der Elektronikeinheit nach der Montage des Leistungskondensators 1 zugewandte Bereich des Leistungskondensators 1 auch offen ausgestaltet sein, das heißt keine Kondensatorgehäusewand 8 aufweisen. In diesem Fall werden die als Y-Kondensatoren wirkenden Flächenkondensatoren unmittelbar zwischen den Stromschienen 4 und 5 sowie der Gehäusewand 100 der Elektronikeinheit ausgebildet, wodurch sich auch eine unmittelbare elektrische Verbindung zur Gehäusemasse der Elektronikeinheit ergibt.

Optional können auch zwischen der ersten Kontaktschiene 9 und der zweiten Gehäusewand 10 und/oder zwischen der Zusatzstromschiene 13 und der dritten Gehäusewand 14 Schichten 17 bzw. 18 aus von Luft verschiedenen dielektrischen Materialien angeordnet sein. Auf diese Weise können die Flächenkondensatoren sozusagen "vergrößert" werden und damit die Entstörwirkung verbessert werden.

Alternativ zur dargestellten Ausführungsform kann es zur Enstörung auch ausreichen, nur einen der beiden Y-Kondensatoren Cy(T-) oder Cy(T+) zu realisieren. Auch ist es möglich, den oder die Y-Kondensatoren nicht an den Stromschienen zu realisieren und ggf. durch Einbringen weiterer dielektrischer Schichten an den Kontakt- und Zusatzstromschienen zu erweitern, sondern beispielsweise nur an einer der Kontaktschienen oder der Zusatzstromschiene zu realisieren. Für die Anwendung der Erfindung ist es lediglich entscheidend, dass durch geeignete Anordnung einer dielektrischen Schicht zumindest ein Y-Kondensator zwischen einer Bestromungseinheit und dem Kondensatorgehäuse oder dem Gehäuse der Elektronikeinheit gebildet wird. Dabei ist allerdings zu beachten, dass im Falle der Realisierung des Y-Kondensators zwischen der Bestromungseinheit und dem Kondensatorgehäuse die entsprechende Gehäusewand des Kondensatorgehäuses nach Montage des Leistungskondensators an der Elektronikeinheit eine galvanische, also elektrisch leitende Verbindung zur Gehäusemasse der Elektronikeinheit aufweist.

Die beiden Stromschienen 4 und 5 bilden gemeinsam mit dem dazwischen liegenden Dielektrikum 15 auch einen X-Kondensator Cx, welcher parallel zu dem eigentlichen, durch den oder die Kondensatorwickel 12 gebildeten Leistungskondensator geschaltet ist. Leistungskondensatoren können funktionsbedingt eine große Energiemenge aufnehmen sind aber "langsam". Die Erfindung bietet die Möglichkeit zumindest für das zwischen den Stromschienen 4 und 5 liegende Dielektrikum 15 ein für die Hochfrequenztechnik geeignetes dielektrisches Material zu verwenden. Auf diese Weise entsteht ein zu dem eigentlichen Leistungskondensator parallel geschalteter deutlich "schnellerer" Kondensator, welcher höhere Frequenzen deutlich besser "kurzschließen" kann und damit die Entstörwirkung verbessert.

Fig. 3 zeigt eine schematische Darstellung einer elektrischen Maschine 30 mit einem daran angeschlossenen Wechselrichter in Form eines Pulswechselrichters 31, wie sie beispielsweise in Kraftfahrzeugen eingesetzt werden. Der Pulswechselrichter 31 umfasst mehrere Leistungsschaltelemente 32a-32f, welche mit einzelnen Phasen U, V, W der elektrischen Maschine 30 verbunden sind und die Phasen U, V, W entweder gegen ein hohes Versorgungspotential (T+) oder ein niedriges Versorgungspotential (T-) schalten. Die mit dem hohen Versorgungspotential T+ verbundenen Leistungsschaltelemente 32a-32c werden dabei auch als "High-Side-Schalter" und die mit dem niedrigen Versorgungspotential T-verbundenen Leistungsschaltelemente 32d-32f als "Low-Side-Schalter" bezeichnet. Die Leistungsschaltelemente können beispielsweise als IGBTs (Insolated Gate Bipolar Transistors) oder als MOSFETs (Metal Oxide Semiconductor Field-Effect Transistors) ausgeführt sein.

Der Pulswechselrichter 31 bestimmt Leistung und Betriebsart der elektrischen Maschine 1 und wird von einem nicht dargestelltem Steuergerät entsprechend angesteuert. Die elektrische Maschine 30 kann somit wahlweise im Motor- oder Generatorbetrieb betrieben werden. Im Motorbetrieb erzeugt sie ein zusätzliches Antriebsmoment, das den Verbrennungsmotor z.B. in einer Beschleunigungsphase unterstützt. Im Generatorbetrieb wird dagegen mechanische Energie in elektrische Energie gewandelt und in einem Energiespeicher, hier einer Batterie 33 gespeichert. Die Batterie 33 ist mit einem nicht dargestellten Energieversorgungsnetz in einem Kraftfahrzeug verbunden, wobei die Batterie als Hochvoltbatterie und das Energieversorgungsnetz zum Beispiel als Hochvolt-Traktionsnetz in einem Hybridfahrzeug ausgeführt sein kann.

Parallel zum Pulswechselrichter 2 ist ein Zwischenkreiskondensator C_{ZK} angeordnet, der im Wesentlichen zur Stabilisierung der Batterie-Spannung dient, erfindungsgemäß aber auch als Entstörglied zur Verbesserung der EMV genutzt wird.

In der elektrischen Maschine sind neben schematisch dargestellten Wicklungssträngen 34a-34c auch parasitäre Kapazitäten C_{EM} dargestellt, welche im Wesentlichen für die Störströme verantwortlich sind, welche es gilt durch die erfindungsgemäße Ausgestaltung des Zwischenkreiskondensators gezielt rückzuführen.

Die durch eine erfindungsgemäße Ausgestaltung des Zwischenkreiskondensators C_{ZK} erzeugten Y-Kondensatoren Cy+ und Cy- sind in Form entsprechender Ersatzschaltbilder dargestellt. Weitere Entstörkapazitäten sind nicht erforderlich.

Die Erfindung wurde anhand der Figuren für eine konkrete Ausgestaltung eines Leistungskondensators erläutert. Es sei aber darauf hingewiesen, dass die Erfindung selbstverständlich auch auf andere Ausführungsformen von Leistungskondensatoren, insbesondere hinsichtlich Gehäuseform, Verlauf der Verschienungen und Kontaktierung der Kondensatorwickel, anwendbar ist. Entscheidend ist letztendlich lediglich, dass zumindest zwischen einer Bestromungseinheit und einer Gehäusewand ein dielektrisches Material eingebracht wird, so dass integrierte Entstörkapazitäten gebildet werden.

## Patentansprüche

1. Leistungskondensator (1), insbesondere Zwischenkreiskondensator, mit
- einem Kondensatorgehäuse (2), welches eine erste Gehäusewand (8), insbesondere aus Metall, aufweist, die mit einem Gehäuse (100) einer Elektronikeinheit, insbesondere Leistungselektronikeinheit, galvanisch verbindbar ist, **gekennzeichnet durch**
- flächig ausgeführte Bestromungseinheiten (40, 50) zum Bestromen des Leistungskondensators (1), wobei ein erster Teilbereich einer ersten Bestromungseinheit (40) in einem Innenraum des Gehäuses (2) benachbart und beabstandet zu der ersten Gehäusewand (8) oder zu einer mit der ersten Gehäusewand (8) leitfähig verbundenen anderen Gehäusewand des Kondensatorgehäuses (2) verläuft,
- wobei zwischen dem ersten Teilbereich (4) der ersten Bestromungseinheit (40) und dieser Gehäusewand eine Schicht (16) aus einem von Luft verschiedenem dielektrischen Material angeordnet ist.

2. Leistungskondensator (1) nach Anspruch 1, wobei die Bestromungseinheiten (40, 50) zumindest in einem zweiten Teilbereich, welcher auch dem ersten Teilbereich (4) der ersten Bestromungseinheit (40) entsprechen kann, im Wesentlichen überlappend und beabstandet zueinander verlaufen und in dem zweiten Teilbereich zwischen den Bestromungeinheiten (40, 50) eine Schicht (15) aus einem von Luft verschiedenem dielektrischen Material angeordnet ist.

3. Leistungskondensator (1) nach einem der Ansprüche 1 oder 2, wobei der erste Teilbereich der ersten Bestromungseinheit (40) durch eine erste Stromschiene (4) gebildet wird, welche elektrisch leitend mit einer ersten, flächig ausgebildeten Kontaktschiene (9) verbunden ist, welche sich entlang einer zweiten Gehäusewand (10) des Kondensatorgehäuses (2) benachbart und beabstandet zu dieser erstreckt und eine zweite Bestromungseinheit (50) eine zweite Stromschiene (5) umfasst, welche im Wesentlichen überlappend und beabstandet zu der ersten Stromschiene (4) verläuft und elektrisch leitend mit einer flächig ausgestalteten zweiten Kontaktschiene (11) verbunden ist, welche sich entlang einer der zweiten Gehäusewand (10) gegenüberliegenden Seite des Kondensatorgehäuses (2) erstreckt, und die Kontaktschienen (9, 11) zur Bestromung mindestens eines Kondensatorwickels (12) dienen.

4. Leistungskondensator nach Anspruch 3, wobei zwischen der ersten Kontaktschiene (9) und der zweiten Gehäusewand (10) eine Schicht (17) aus einem von Luft verschiedenem dielektrischen Material angeordnet ist.

5. Leistungskondensator nach einem der Ansprüche 3 oder4, wobei eine der Kontaktschienen (9; 11) elektrisch mit einer flächig ausgestalteten Zusatzstromschiene (13) verbunden ist, welche sich entlang einer der ersten Gehäusewand (8) gegenüberliegenden dritten Gehäusewand (14) des Kondensatorgehäuses (2) erstreckt, und zwischen der Zusatzstromschiene (13) und der dritten Gehäusewand (14) eine Schicht (18) aus einem von Luft verschiedenem dielektrischem Material angeordnet ist.

6. Leistungskondensator nach einem der vorhergehenden Ansprüche, wobei die Schicht (15; 16; 17; 18) aus dielektrischem Material als dielektrische Folie oder dielektrisches Gel oder dielektrisches Harz ausgebildet ist.

7. Leistungskondensator nach einem der vorhergehenden Ansprüche, wobei als dielektrisches Material ein für die Hochfrequenztechnik geeignetes dielektrisches Material verwendet wird.

8. Leistungskondensator nach einem der vorhergehenden Ansprüche, wobei das Kondensatorgehäuse (2) topfförmig ausgestaltet ist und auf seiner offenen Seite mit Hilfe einer Vergussmasse (20) verschlossen ist.

9. Elektronikmodul, mit
einer Elektronikeinheit (31), insbesondere einem Pulswechselrichter, mit einem Gehäuse, und
einem Leistungskondensator (CZK) gemäß einem der Ansprüche 1 bis 7, der an der Elektronikeinheit (31) montiert ist, so dass sich zwischen den angrenzenden Gehäusewänden eine galvanische Verbindung ergibt.

## Claims

1. Power capacitor (1), in particular intermediate circuit capacitor, having
- a capacitor housing (2) which has a first housing wall (8), in particular composed of metal, which can be electrically conductively connected to a housing (100) of an electronics unit, in particular power electronics unit, **characterized by**
- flat current supply units (40, 50) for supplying current to the power capacitor (1), wherein a first subregion of a first current supply unit (40) runs in an interior of the housing (2) adjacent to and at a distance from the first housing wall (8) or another housing wall of the capacitor housing (2) which is conductively connected to the first housing wall (8),
- wherein a layer (16) which is composed of a dielectric material which differs from air is arranged between the first subregion (4) of the first current supply unit (40) and the said housing wall.

2. Power capacitor (1) according to Claim 1, wherein the current supply units (40, 50) run in a substantially overlapping manner and at a distance from one another at least in a second subregion which can also correspond to the first subregion (4) of the first current supply unit (40), and a layer (15) which is composed of a dielectric material which differs from air is arranged between the current supply units (40, 50) in the second subregion.

3. Power capacitor (1) according to either of Claims 1 and 2, wherein the first subregion of the first current supply unit (40) is formed by a first busbar (4) which is electrically conductively connected to a first, flat contact rail (9) which extends along a second housing wall (10) of the capacitor housing (2) adjacent to and at a distance from said second housing wall, and a second current supply unit (50) comprises a second busbar (5) which runs in a substantially overlapping manner and at a distance from the first busbar (4) and is electrically conductively connected to a flat second contact rail (11) which extends along a side of the capacitor housing (2) which is opposite the second housing wall (10), and the contact rails (9, 11) serve to supply current to at least one capacitor winding (12).

4. Power capacitor according to Claim 3, wherein a layer (17) which is composed of a dielectric material which differs from air is arranged between the first contact rail (9) and the second housing wall (10).

5. Power capacitor according to either of Claims 3 and 4, wherein one of the contact rails (9; 11) is electrically connected to a flat auxiliary busbar (13) which extends along a third housing wall (14) of the capacitor housing (2) which is situated opposite the first housing wall (8), and a layer (18) which is composed of a dielectric material which differs from air is arranged between the auxiliary busbar (13) and the third housing wall (14).

6. Power capacitor according to one of the preceding claims, wherein the layer (15; 16; 17; 18) which is composed of a dielectric material is in the form of a dielectric film or dielectric gel or dielectric resin.

7. Power capacitor according to one of the preceding claims, wherein the dielectric material used is a dielectric material which is suitable for radiofrequency technology.

8. Power capacitor according to one of the preceding claims, wherein the capacitor housing (2) is of pot-like design and is closed on its open side with the aid of an encapsulation compound (20).

9. Electronics module having
an electronics unit (31), in particular a pulse-controlled inverter, having a housing, and
a power capacitor (CZK) according to one of Claims 1 to 7 which is fitted on the electronics unit (31) so that an electrically conductive connection is produced between the adjoining housing walls.

## Revendications

1. Condensateur de puissance (1), en particulier condensateur pour circuit intermédiaire, présentant :
un boîtier (2) de condensateur qui présente une première paroi (8) de boîtier, en particulier en métal, qui peut être raccordée galvaniquement au boîtier (100) d'une unité électronique, en particulier d'une unité d'électronique de puissance,
**caractérisé par**
des unités (40, 50) d'alimentation en courant de configuration aplatie, qui alimentent en courant le condensateur de puissance (1),
une première partie d'une première unité (40) d'alimentation en courant s'étendant dans l'espace intérieur du boîtier (2) au voisinage et à distance de la première paroi (8) du boîtier ou au voisinage d'une autre paroi du boîtier (2) du condensateur raccordée de manière conductrice à la première paroi (8) du boîtier,
une couche (16) en un matériau diélectrique différent de l'air étant disposée entre la première partie (4) de la première unité (40) d'alimentation en courant et cette paroi du boîtier.

2. Condensateur de puissance (1) selon la revendication 1, dans lequel les unités (40, 50) d'alimentation en courant s'étendent essentiellement en superposition et à distance mutuelle dans une deuxième partie qui peut correspondre également à la première partie (4) de la première unité (40) d'alimentation en courant et en ce qu'une couche (15) en un matériau diélectrique différent de l'air est disposée dans la deuxième partie entre les unités (40, 50) d'alimentation en courant.

3. Condensateur de puissance (1) selon l'une des revendications 1 ou 2, dans lequel la première partie de la première unité (40) d'alimentation en courant est formée par un premier rail de courant (4) raccordé de manière électriquement conductrice à un premier rail de contact (9) de configuration aplatie qui s'étend le long d'une deuxième paroi (10) du boîtier (2) du condensateur au voisinage et à distance de cette dernière et une deuxième unité (50) d'alimentation en courant comporte un deuxième rail de courant (5) qui s'étend essentiellement en superposition et à distance du premier rail de courant (4) et est reliée de manière électriquement conductrice à un deuxième rail de contact (11) de configuration aplatie qui s'étend le long d'un côté du boîtier (2) du condensateur situé face à la deuxième paroi (10) du boîtier, les rails de contact (9, 11) servant à alimenter en courant au moins un enroulement (12) du condensateur.

4. Condensateur de puissance selon la revendication 3, dans lequel une couche (17) en un matériau diélectrique différent de l'air est disposée entre le premier rail de contact (9) et la deuxième paroi (10) du boîtier.

5. Condensateur de puissance selon l'une des revendications 3 ou 4, dans lequel l'un des rails de contact (9; 11) est raccordé électriquement à un rail supplémentaire de courant (13) de configuration aplatie qui s'étend le long d'une troisième paroi (14) du boîtier (2) du condensateur située face à la première paroi (8) du boîtier, une couche (18) en un matériau diélectrique différent de l'air étant disposée entre le rail supplémentaire de courant (13) et la troisième paroi (14) du boîtier.

6. Condensateur de puissance selon l'une des revendications précédentes, dans lequel la couche (15; 16; 17; 18) en matériau diélectrique est configurée comme film diélectrique, gel diélectrique ou résine diélectrique.

7. Condensateur de puissance selon l'une des revendications précédentes, dans lequel un matériau diélectrique convenant pour la technique des hautes fréquences est utilisé comme matériau diélectrique.

8. Condensateur de puissance selon l'une des revendications précédentes, dans lequel le boîtier (2) du condensateur est configuré en cuvette dont le côté ouvert est fermé à l'aide d'une pâte de scellement (20).

9. Module électronique présentant
une unité électronique (31), en particulier un redresseur à impulsions,
un boîtier et
un condensateur de puissance (CZK) selon l'une des revendications 1 à 7 monté sur l'unité électronique (31) de telle sorte qu'une liaison galvanique soit établie entre les parois adjacentes du boîtier.
